# DEMANDE DE BREVET EUROPEEN

(11) **EP 1 172 544 A1**
(43) Date de publication de la demande: **16.01.2002**
(21) Numéro de dépôt: 00870164.1
(22) Date de dépôt: 14.07.2000
(51) Int. Cl.: F02K 9/78, F25J 3/04

(54) **Moteur d'un lanceur spatial avec dispositif de collecte et séparation d'air**

(71) Demandeur: Techspace Aero S.A., 4041 Herstal (BE)
(72) Inventeur: Breugelmans, Frans, 3290 Diest (BE); Hendrick, Patrick, 1030 Bruxelles (BE); Marquet, Benoît, 1457 Nil-Saint-Vincent (BE); Strengnart, Marc, 4367 Crisnee (BE)
(74) Mandataire: Van Malderen, Joelle

(57) **Abrégé**

La présente invention se rapporte à un procédé de collecte d'air enrichi en oxygène durant une phase de vol aérobie d'un lanceur spatial et destiné à être utilisé pour la combustion au sein d'au moins un moteur fusée cryotechnique hors atmosphère, ledit lanceur comprenant au moins un moteur de type turbofan, ledit moteur turbofan étant à double corps et à double flux et comprenant un corps haute pression (HP) constitué essentiellement d'un compresseur haute pression (2), d'une chambre de combustion (3) où s'effectue la combustion d'un fluide cryotechnique tel que de l'hydrogène (H) et de turbines (4) et un corps basse pression (BP) entourant le corps haute pression (HP) essentiellement constitué d'une soufflante (1,1') permettant de récolter le fluide extérieur sous la forme d'un flux principal (A) et d'un flux dérivé (A') et une turbine basse pression (5) éventuellement suivie par la zone de post-combustion (7) et d'une tuyère à géométrie variable (8), le flux principal (A) étant destiné à suivre le trajet habituel des diverses compressions, combustions et détentes prévues dans le turbofan, caractérisé en ce que le flux dérivé (A') est soumis, après compression et refroidissement, à une séparation au niveau d'un séparateur (13) permettant de générer un flux d'air enrichi en oxygène (B) et un flux d'air appauvri en oxygène (C), et en ce que le flux d'air enrichi en oxygène (B) est stocké en vue d'être utilisé pour la combustion au sein d'un moteur fusée tandis que le flux d'air appauvri en oxygène (C) est éjecté, de préférence en étant mélangé au flux principal (X) à la sortie de la turbine basse pression (5).

## Description

### Objet de l'invention

La présente invention se rapporte à un procédé et un dispositif collecteurs d'air enrichi en oxygène, destinés à être utilisé par un moteur fusée cryotechnique permettant la propulsion d'un lanceur spatial.

La présente invention se rapporte également au moteur de type turbofan ou turbocompresseur équipé de ce dispositif collecteur.

### Etat de la technique

Certains lanceurs spatiaux sont équipés de moteurs de fusée cryotechniques hydrogène / oxygène qui sont des moteurs classiques connus de l'homme de l'art.

On observe que pour un lanceur équipé d'un tel moteur, la masse d'oxygène au décollage est considérable et peut être comprise entre 15 et 75% de la masse totale du lanceur.

L'idée consiste donc à faire décoller de tels lanceurs avec les réservoirs d'oxygène vides ou au moins partiellement vides et de les remplir avec de l'air ou plus particulièrement de l'air enrichi en oxygène qui sera collecté dans l'atmosphère pendant une séquence de vol aérobie. L'air enrichi en oxygène est durant cette phase stocké à bord. Il est utilisé par le moteur fusée cryotechnique en dehors de l'atmosphère.

Pour réaliser cela, des systèmes de collecte ont déjà été étudiés depuis les années 50, et plus particulièrement aux Etats-Unis, où des prototypes de sous-systèmes au moins ont été réalisés.

De tels dispositifs ou systèmes de collecte sont essentiellement composés d'une entrée d'air, d'un compresseur permettant de comprimer l'air, d'échangeurs et d'un séparateur. Plusieurs types de séparateurs ont été étudiés : séparateurs rotatifs, tube à vortex, paramagnétiques, etc. Les échangeurs ont pour but de refroidir et de condenser l'air entrant et ceci grâce à la capacité de refroidissement d'un fluide cryogénique qui peut être de l'hydrogène présent à bord du lanceur. L'organisation des échangeurs est très variable selon les dispositifs envisagés et permet d'échanger la chaleur entre l'air et l'hydrogène soit directement, soit par l'intermédiaire d'un autre flux tel que l'hélium ou l'azote. Ces échangeurs peuvent également permettre de réchauffer l'air appauvri avant son éjection.

Le séparateur a pour but de séparer l'air entrant en un flux d'air enrichi en oxygène et en un flux d'air appauvri en oxygène, le flux d'air enrichi en oxygène étant stocké tandis que le flux d'air appauvri est rejeté vers l'extérieur.

Il s'agit essentiellement de systèmes indépendants de la propulsion même s'ils participent parfois à la propulsion par l'éjection adéquate de l'air appauvri. Ils présentent en outre les inconvénients suivants : création d'une traînée proportionnelle au débit d'air traité, besoin d'un apport de puissance, que celle-ci soit externe ou générée par le système, et besoin d'une entrée d'air, d'un compresseur et d'une tuyère d'éjection.

On peut caractériser un système à collecte par le taux de collecte qui est la quantité d'air enrichi produite par kilo d'hydrogène consommé, par l'efficacité de séparation qui est la proportion d'oxygène entrant dans le système à collecte et qui est collecté et par la concentration en oxygène de l'air collecté.

Pour réaliser la collecte telle que présentée ci-dessus, il est nécessaire qu'une partie du vol soit propulsée par un moteur aérobie, c'est-à-dire qui utilise l'oxygène de l'atmosphère comme comburant. On propose d'utiliser un moteur turbofan au décollage et pendant la première partie du vol jusqu'à un maximum de Mach 4. A Mach 4 ou à une vitesse inférieure, une transition vers une propulsion par moteur de type statoréacteur (ramjet) peut avoir lieu. Dans tous les cas, une dernière transition vers une propulsion par moteur fusée doit avoir lieu, hors de l'atmosphère, pour atteindre une vitesse suffisante pour la satellisation.

Le lanceur spatial peut être mono-étage mais il est de préférence bi-étage, seul le deuxième étage entrant en fonction de préférence au moment de la transition vers la propulsion par moteur fusée afin de ne pas devoir accélérer le ou les moteurs aérobies qui sont lourds.

### Buts de l'invention

La présente invention vise à proposer un procédé et un dispositif de collecte d'air enrichi en oxygène durant la première phase de vol d'un lanceur spatial, qui servira de comburant pour le moteur fusée de ce lanceur spatial, ces procédé et dispositif ne présentant pas les inconvénients de l'état de la technique.

En outre, la présente invention vise plus particulièrement à proposer une solution qui soit plus efficace, qui présente une consommation en énergie plus réduite, un volume ou un rapport poids plus restreint, et qui soit moins coûteuse que les solutions de l'état de la technique.

### Principaux éléments caractéristiques de l'invention

La présente invention vise à proposer d'intégrer directement le dispositif de collecte dans le flux secondaire des moteurs de propulsion, des turbofans ou turboréacteurs à double flux utilisés pour propulser des lanceurs spatiaux pendant la première phase du vol.

Plus particulièrement, la présente invention vise à proposer un procédé de collecte d'air enrichi en oxygène durant une phase de vol aérobie d'un lanceur spatial et destiné à être utilisé pour la combustion au sein d'au moins un moteur fusée cryotechnique hors atmosphère, ledit lanceur comprenant au moins un moteur de type turbofan, ledit moteur turbofan étant à double corps et à double flux et comprenant un corps haute pression constitué essentiellement d'un compresseur haute pression, d'une chambre de combustion où s'effectue la combustion d'un fluide cryotechnique tel que de l'hydrogène et de turbines et un corps basse pression entourant le corps haute pression essentiellement constitué d'une soufflante permettant de récolter le fluide extérieur sous la forme d'un flux principal et d'un flux dérivé et une turbine basse pression éventuellement suivie par la zone de post-combustion et d'une tuyère à géométrie variable, le flux principal étant destiné à suivre le trajet habituel des diverses compressions, combustions et détentes prévues dans le turbofan, caractérisé en ce que le flux dérivé est soumis, après compression et refroidissement, à une séparation au niveau d'un séparateur permettant de générer un flux d'air enrichi en oxygène et un flux d'air appauvri en oxygène, et en ce que le flux d'air enrichi en oxygène est stocké en vue d'être utilisé pour la combustion au sein d'un moteur fusée tandis que le flux d'air appauvri en oxygène est éjecté, de préférence en étant mélangé au flux principal à la sortie de la turbine basse pression.

De préférence, ledit flux mélangé passe dans la zone de post-combustion où s'effectue la combustion d'un débit de fluide cryotechnique avant d'être éjecté par la tuyère à géométrie variable.

Avantageusement, le flux dérivé subit une série de refroidissements / compressions effectuées au sein de plusieurs échangeurs et d'un ensemble refroidisseur / condenseur.

Selon une première forme d'exécution, le flux dérivé subit avant d'être récolté par la soufflante un refroidissement dans un échangeur thermique.

Selon une deuxième forme d'exécution, le fluide cryotechnique, et en particulier l'hydrogène, est utilisé pour effectuer les échanges thermiques au sein des échangeurs avec le flux d'air dérivé.

Selon une troisième forme d'exécution, on utilise le flux d'air appauvri pour effectuer les échanges thermiques au sein des échangeurs avec le flux d'air dérivé.

La présente invention vise également à proposer un dispositif de collecte d'air enrichi en oxygène durant une phase de vol aérobie d'un lanceur spatial et destiné à être utilisé pour la combustion au sein d'au moins un moteur fusée cryotechnique hors atmosphère, ledit lanceur comprenant au moins un moteur de type turbofan, ledit moteur turbofan étant à double corps et à double flux et comprenant un corps haute pression constitué essentiellement d'un compresseur haute pression, d'une chambre de combustion et de turbines et un corps basse pression entourant le corps haute pression essentiellement constitué d'une soufflante permettant de récolter le fluide extérieur et en particulier l'air et d'une turbine basse pression éventuellement suivie d'une zone de post-combustion et d'une tuyère à géométrie variable, caractérisé en ce qu'il comprend un échangeur, un séparateur auquel est associé un ensemble refroidisseur / condenseur, ledit échangeur, ledit séparateur et l'ensemble refroidisseur / condenseur étant disposés directement en aval de ladite soufflante en vue d'utiliser l'air provenant de cette soufflante sous la forme d'un flux dérivé pour le collecter et le séparer en un flux d'air enrichi en oxygène et un flux d'air appauvri en oxygène.

Avantageusement, un second échangeur est placé en amont de la soufflante.

Un troisième aspect de la présente invention vise à proposer un moteur de type turbofan ou turbocompresseur, à double corps et à double flux et comprenant un corps haute pression constitué essentiellement d'un compresseur haute pression, d'une chambre de combustion et de turbines et un corps basse pression entourant le corps haute pression essentiellement constitué d'une soufflante permettant de récolter le fluide extérieur et en particulier l'air et d'une turbine basse pression éventuellement suivie d'une zone de post-combustion et d'une tuyère à géométrie variable, caractérisé en ce que la soufflante est constituée de deux ou trois étages de basse pression et qu'elle comprend des nageoires installées sur ses aubes et des séparations installées sur ses redresseurs afin de séparer le flux dérivé du flux principal.

### Brève description des dessins

La figure 1 décrit de manière particulièrement schématique le principe mis en oeuvre dans un turbofan ou un turboréacteur permettant la collecte d'air selon le procédé de l'invention.

La figure 2 représente le bilan thermodynamique des différents flux intervenant dans le procédé selon l'invention.

Les figures 3 représentent un exemple de réalisation d'un échangeur disposé en amont de la soufflante et utilisé dans le procédé et le dispositif selon la présente invention.

Les figures 4 représentent un exemple de réalisation d'un échangeur disposé à la sortie du séparateur et utilisé dans le procédé et le dispositif selon la présente invention.

Les figures 5 représentent un exemple de réalisation d'un refroidisseur utilisé dans le procédé et le dispositif selon la présente invention.

La figure 6 représente une vue en coupe de l'intégration du moteur, du système de collecte et de l'entrée d'air, qui donne également les dimensions axiales (AL) en abscisse et radiales (RL) en ordonnée.

La figure 7 est une vue de détail de la figure 6, qui représente plus particulièrement l'intégration du moteur et du système de collecte.

Les figures 8 et 9 représentent respectivement le cheminement de l'air pendant la collecte et le cheminement de l'air hors collecte pour un exemple particulier de réalisation du procédé selon la présente invention.

### Description détaillée d'une forme d'exécution de l'invention

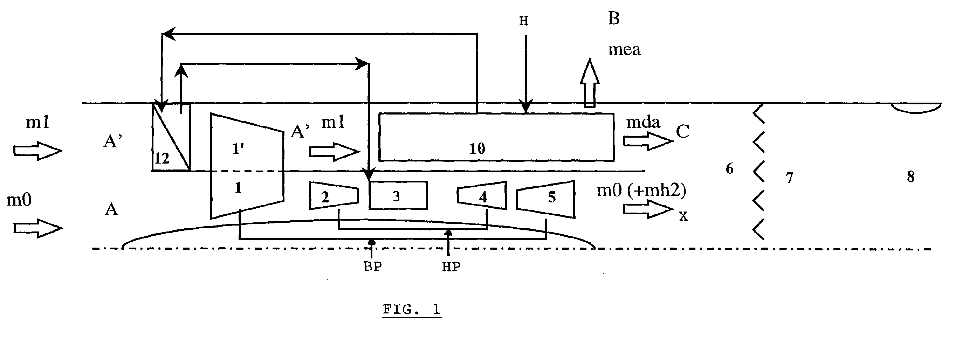

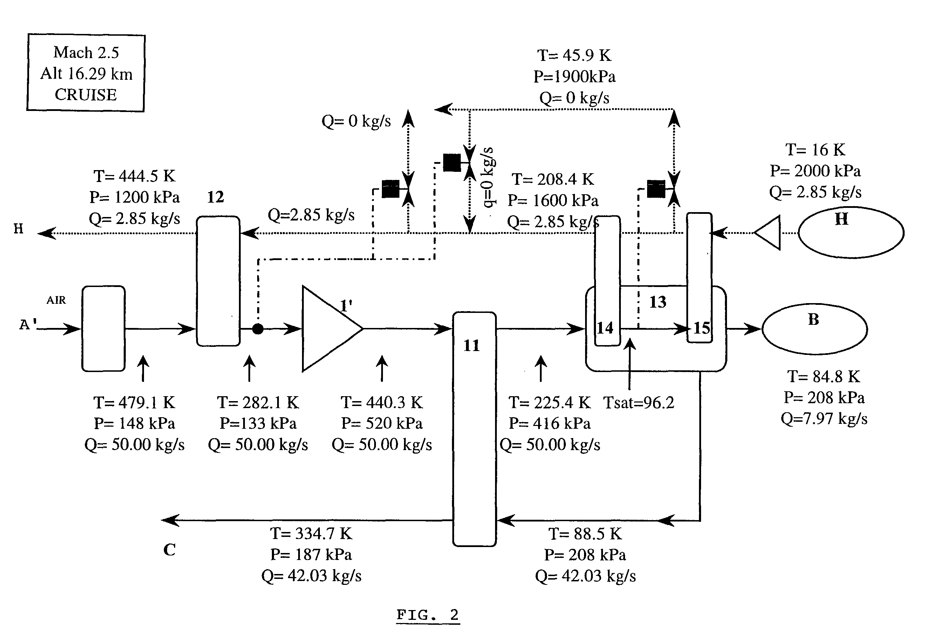

La figure 1 représente d'une manière particulièrement schématique un moteur turbofan à double corps et à double flux avec réchauffe (ou post-combustion) que l'on peut utiliser dans le procédé de l'invention, tandis que la figure 2 décrit le parcours des différents flux intervenant dans le procédé.

Un moteur classique turbofan à double corps comprend d'une part un corps haute pression HP constitué d'un compresseur haute pression 2 et de turbines haute pression 4 entre lesquelles est disposée la chambre de combustion 3. Ce corps haute pression HP est entouré par un corps basse pression BP également constitué d'un compresseur et d'une turbine 5, le compresseur basse pression se présentant de préférence sous la forme d'une soufflante 1,1' et permettant de récolter le fluide extérieur et de le diriger ensuite vers le corps haute pression HP où il subit la combustion.

Tant le compresseur basse pression 1 que le compresseur haute pression 2 comprennent plusieurs étages de compression qui permettent d'élever progressivement la pression du fluide avant son entrée dans la chambre de combustion.

Selon un exemple d'exécution préféré, le corps haute pression HP comprend environ quatre étages successifs de compression. La soufflante 1,1' comprend également quatre étages de compression successifs.

A la sortie de la chambre de combustion 3, les gaz brûlés rencontrent les aubes des turbines haute pression 4 puis basse pression 5, sur lesquelles ils perdent une partie de leur énergie, celle-ci étant utilisée pour entraîner les compresseurs. Ensuite, les gaz passent dans la zone de post-combustion 7 où une seconde combustion peut avoir lieu. La détente des gaz se produit ensuite essentiellement dans la tuyère à géométrie variable terminale 8 permettant la poussée par propulsion du lanceur.

Dans le cas d'un moteur à double flux, on envoie une partie du fluide (air) récolté après une simple compression directement dans la tuyère à géométrie variable terminale 8.

Selon la présente invention, un dispositif de collecte 10 permet de récolter une partie du flux qui est appelée le flux dérivé A' en aval de la soufflante dans sa zone externe 1', tandis que le flux principal A subit de manière classique les diverses compressions et la combustion prévues dans un turbofan, donnant un flux principal X à la sortie de la turbine basse pression 5.

Comme représenté à la figure 2, le dispositif de collecte 10 comprend essentiellement un premier échangeur de chaleur 11, un séparateur 13 auquel sont associés un refroidisseur 14 et un condenseur 15.

La capacité calorifique utilisée par ces différents composants que constituent les échangeur, refroidisseur, condenseur peut provenir soit directement du combustible qui peut être de l'hydrogène mais également du méthane ou tout autre combustible cryotechnique, soit d'un fluide intermédiaire entre l'air et le combustible tel que l'hélium ou l'azote, soit de l'air appauvri obtenu après séparation.

Selon la forme d'exécution préférée de l'invention représentée à la figure 2, on prévoit un échange thermique au sein du premier échangeur de chaleur 11 avec l'air appauvri C, tandis que l'échange thermique avec l'ensemble refroidisseur / condenseur 14,15 s'effectue avec le combustible cryotechnique H, qui est dans le présent cas de l'hydrogène.

En outre, on dispose également un échangeur de chaleur 12 en amont de la soufflante 1' afin de refroidir le flux dérivé A'. La capacité calorifique de cet échangeur provient de préférence directement du combustible H.

Après passage au sein de l'échangeur 12, le flux dérivé A' passe dans la zone externe de la soufflante 1' avant d'entrer dans le système de collecte 10.

Il est préférable que les deux flux (principal A et dérivé A') soient séparés dès le départ, et ceci y compris dans la soufflante. Cette soufflante se présente sous la forme d'un compresseur basse pression à quatre étages. Ceci peut être avantageusement réalisé par des "nageoires" installées sur les aubes et des séparations installées sur les redresseurs. Une étanchéité parfaite n'est pas nécessaire à ce stade, mais l'influence (négative) sur les performances sera d'autant plus faible que l'étanchéité sera grande.

Après être passée dans le dispositif de collecte 10, une partie du flux dérivé A' se présente sous la forme d'air secondaire liquide enrichi en oxygène B, présentant une concentration de 90 à 99% en oxygène, et qui sera stocké dans un réservoir. L'autre fraction du flux dérivé, c'est-à-dire de l'air appauvri en oxygène C, passe éventuellement dans la zone de réchauffement de l'échangeur primaire 11 avant d'être mélangé avec le flux principal X à la sortie de la turbine 5 basse pression. Après le mélange, les gaz ainsi formés peuvent encore brûler du combustible dans la zone de post-combustion 7.

Le trajet de l'hydrogène H (ou tout autre combustible cryotechnique) est le suivant : il est pompé et envoyé dans le séparateur 13 où il est échauffé dans l'ensemble refroidisseur / condenseur 14,15 et ensuite dans l'échangeur 12 avant d'être envoyé vers la chambre de combustion 3.

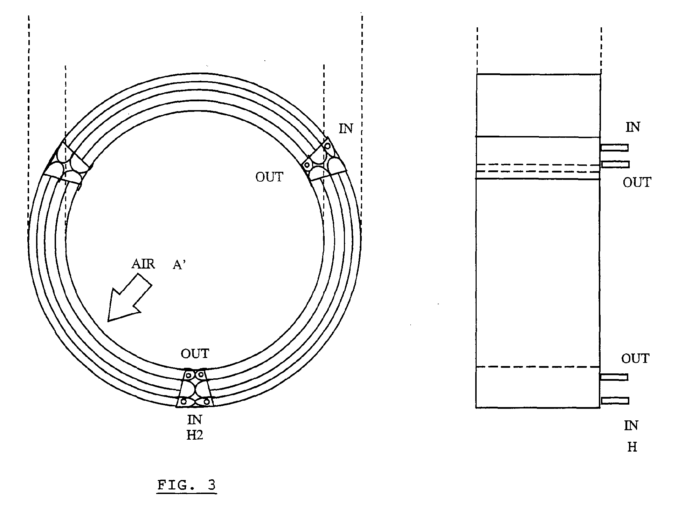

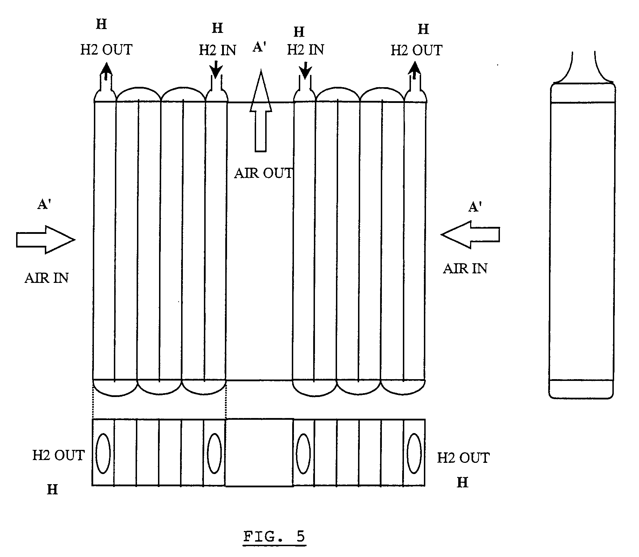

Des exemples particuliers de réalisation de l'échangeur 12, de l'échangeur 11 et du refroidisseur 14 sont représentés respectivement aux figures 3, 4 et 5. Les échangeurs 11 et 12 sont des échangeurs circulaires, en forme de tambour, et qui "entourent" le moteur. Les flux principaux traversent les échangeurs perpendiculairement à leur axe tandis que les flux secondaires circulent dans des tubes.

Avantageusement, la solution que met en oeuvre la présente invention permet la mise en commun de composants nécessaires au système de propulsion et au système de collecte (entrée d'air, compresseur, génération de puissance par la turbine, tuyères d'éjection). Ce dispositif permet en outre de réduire la traînée provoquée par le système à collecte grâce à une éjection plus efficace de l'air appauvri en oxygène. De plus, en dehors de la séquence de collecte, la partie du compresseur dédiée à la collecte participe directement à la propulsion.

A la figure 2 est également représenté le bilan thermodynamique d'une mise en oeuvre décrite de manière schématique à la figure 1. L'exemple utilisé est celui d'un lanceur bi-étage à décollage horizontal. Il est propulsé jusqu'à une vitesse de Mach 3.8 par plusieurs (huit) moteurs turbofans présentant le système de collecte décrit à la figure 1.

Un vol de croisière est prévu à une vitesse de Mach 2.5 pour pouvoir effectuer la collecte de suffisamment d'air enrichi pour la phase de propulsion en moteur fusée.

De préférence, cette collecte est envisagée durant l'accélération du lanceur entre Mach 1.8 et Mach 3.

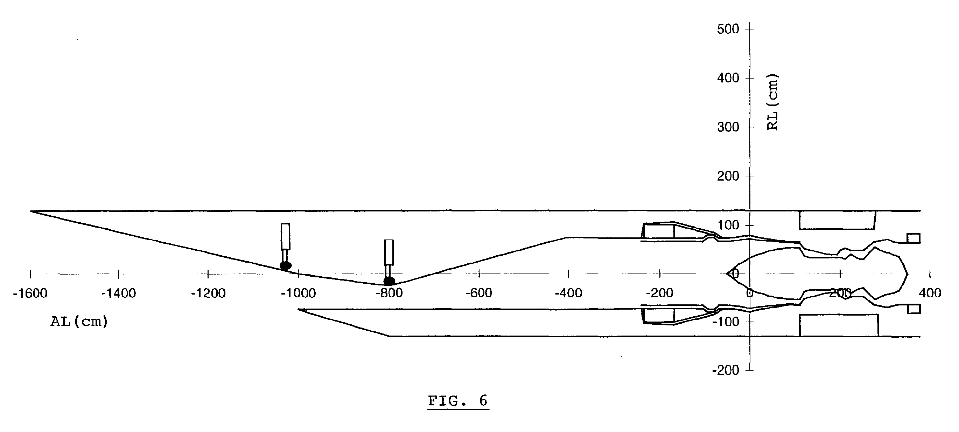

La figure 6 représente l'intégration du moteur, du système de collecte et de l'entrée d'air. Il s'agit d'une entrée d'air 2D variable afin d'avoir une efficacité suffisante du décollage aux vitesses supersoniques.

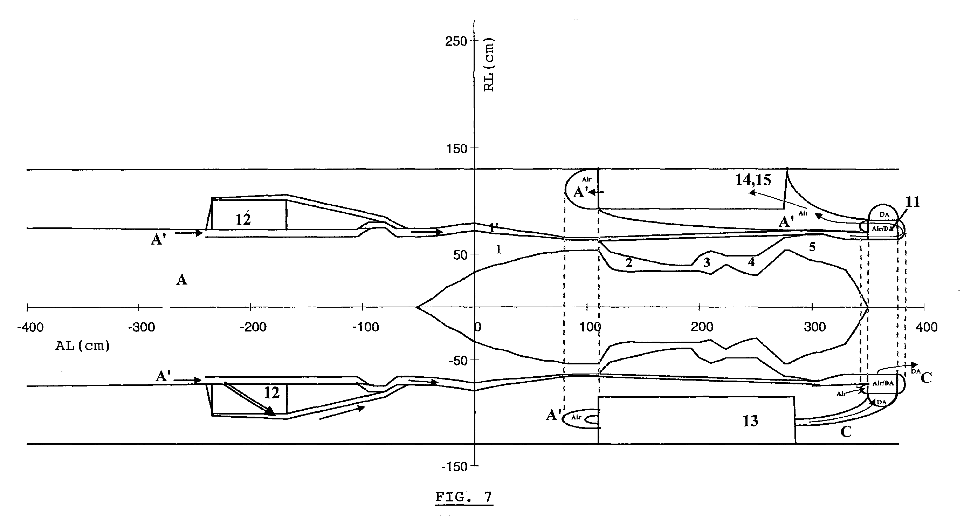

La figure 7 montre les détails de l'intégration du moteur et du système de collecte. L'air entrant par l'entrée d'air est séparé en deux flux A et A'. Le flux principal A suit le chemin classique de l'air dans un turboréacteur. Comme représenté sur cette figure, le flux secondaire A' est séparé du flux principal A en amont du turbofan (soufflante) et dans le turbofan (soufflante).

Le flux secondaire A' peut prendre deux chemins différents selon que la collecte a lieu (durant une croisière et/ou à vitesse modérée) ou non (décollage, vitesse faible et vitesse élevée).

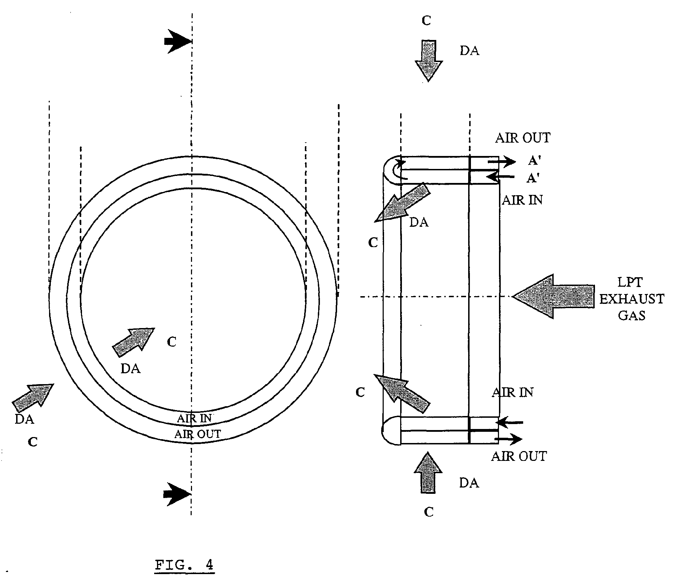

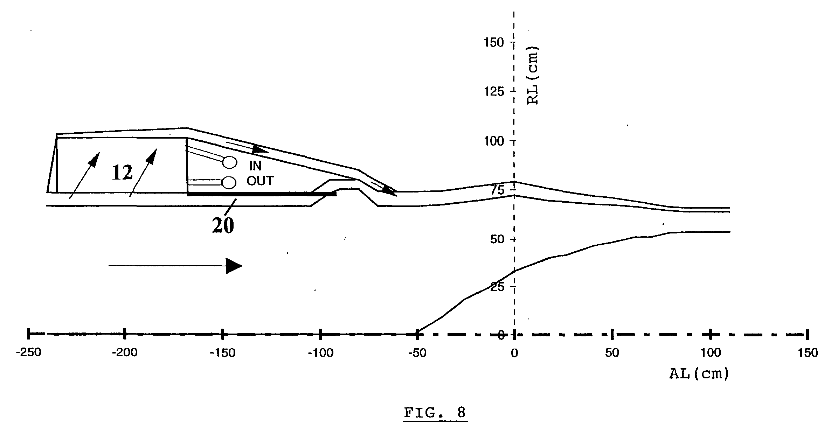

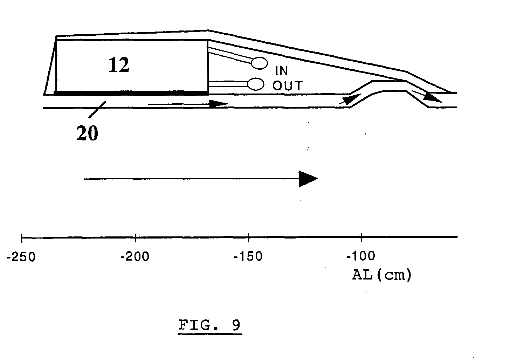

Un exemple de réalisation particulière est représenté aux figures 8 et 9, dans lesquelles on observe que le passage du flux secondaire A' par un chemin ou un autre est déterminé par la position de la plaque cylindrique 20. En dehors des périodes où la collecte est réalisée (figure 9), le flux secondaire A' suit aussi le cheminement classique du flux secondaire d'un turbofan. Pendant la collecte (figure 8), le flux secondaire A' est dévié dans l'échangeur 12 où il est refroidi par un fluide cryotechnique avant le passage dans la partie externe du fan 1'. Le flux secondaire A' longe ensuite le moteur et est refroidi dans un échangeur 11 dont le fluide refroidisseur est de l'air appauvri en oxygène sortant du séparateur. Les échangeurs 11 et 12 (voir figures 4 et 3 respectivement) sont circulaires, en forme de tambours, et "entourent" le moteur. Les flux principaux traversent les échangeurs perpendiculairement à leur axe tandis que les flux secondaires circulent dans des tubes. Après l'échangeur 11, l'air A' passe dans les échangeurs 14 et 15 où il est refroidi et partiellement condensé. L'air A' est ensuite envoyé dans le séparateur 13. Il en sort un flux B, enrichi en oxygène, qui est stocké à bord du lanceur et un flux C appauvri en oxygène qui est envoyé dans l'échangeur 11 pour refroidir l'air A'. Ensuite, le flux C est mélangé avec le flux principal X sortant de la turbine basse pression 5. Le mélange subira ensuite la post-combustion et sera éjecté par la tuyère à géométrie variable 8 pour fournir la poussée.

## Revendications

1. Procédé de collecte d'air enrichi en oxygène durant une phase de vol aérobie d'un lanceur spatial et destiné à être utilisé pour la combustion au sein d'au moins un moteur fusée cryotechnique hors atmosphère, ledit lanceur comprenant au moins un moteur de type turbofan, ledit moteur turbofan étant à double corps et à double flux et comprenant un corps haute pression (HP) constitué essentiellement d'un compresseur haute pression (2), d'une chambre de combustion (3) où s'effectue la combustion d'un fluide cryotechnique tel que de l'hydrogène (H) et de turbines (4) et un corps basse pression (BP) entourant le corps haute pression (HP) essentiellement constitué d'une soufflante (1,1') permettant de récolter le fluide extérieur sous la forme d'un flux principal (A) et d'un flux dérivé (A') et une turbine basse pression (5) éventuellement suivie par la zone de post-combustion (7) et d'une tuyère à géométrie variable (8), le flux principal (A) étant destiné à suivre le trajet habituel des diverses compressions, combustions et détentes prévues dans le turbofan, **caractérisé en ce que** le flux dérivé (A') est soumis, après compression et refroidissement, à une séparation au niveau d'un séparateur (13) permettant de générer un flux d'air enrichi en oxygène (B) et un flux d'air appauvri en oxygène (C), et **en ce que** le flux d'air enrichi en oxygène (B) est stocké en vue d'être utilisé pour la combustion au sein d'un moteur fusée tandis que le flux d'air appauvri en oxygène (C) est éjecté, de préférence en étant mélangé au flux principal (X) à la sortie de la turbine basse pression (5).

2. Procédé selon la revendication 1, **caractérisé en ce que** le flux d'air appauvri en oxygène (C), de préférence ainsi mélangé au flux principal (X) à la sortie de la turbine basse pression (5), passe dans la zone de post-combustion (7) où s'effectue la combustion d'un débit de fluide cryotechnique (H) avant d'être éjecté par la tuyère à géométrie variable (8).

3. Procédé selon la revendication 1 ou 2, **caractérisé en ce que** le flux dérivé (A') subit une série de refroidissements / compressions effectuées au sein de plusieurs échangeurs (11, 12) et d'un ensemble refroidisseur (14) / condenseur (15).

4. Procédé selon la revendication 3 ou 4, **caractérisé en ce que** le flux dérivé (A') subit avant d'être récolté par la soufflante (1,1') un refroidissement dans un échangeur thermique (12).

5. Procédé selon la revendication 3 ou 4, **caractérisé en ce que** le fluide cryotechnique (H), et en particulier l'hydrogène, est utilisé pour effectuer les échanges thermiques au sein des échangeurs (11 ou 12) avec le flux d'air dérivé (A').

6. Procédé selon la revendication 3 ou 4, **caractérisé en ce que** l'on utilise le flux d'air appauvri (C) pour effectuer les échanges thermiques au sein des échangeurs (11 ou 12) avec le flux d'air dérivé (A').

7. Dispositif de collecte d'air enrichi en oxygène durant une phase de vol aérobie d'un lanceur spatial et destiné à être utilisé pour la combustion au sein d'au moins un moteur fusée cryotechnique hors atmosphère, ledit lanceur comprenant au moins un moteur de type turbofan, ledit moteur turbofan étant à double corps et à double flux et comprenant un corps haute pression (HP) constitué essentiellement d'un compresseur haute pression (2), d'une chambre de combustion (3) et de turbines (4) et un corps basse pression (BP) entourant le corps haute pression (HP) essentiellement constitué d'une soufflante (1,1') permettant de récolter le fluide extérieur (A,A') et en particulier l'air et d'une turbine basse pression (5) éventuellement suivie d'une zone de post-combustion (7) et d'une tuyère à géométrie variable (8), **caractérisé en ce qu'**il comprend un échangeur (11), un séparateur (13) auquel est associé un ensemble refroidisseur (14)/condenseur(15), ledit échangeur (11), ledit séparateur(13) et l'ensemble refroidisseur (14)/condenseur(15) étant disposés directement en aval de ladite soufflante (1,1') en vue d'utiliser l'air provenant de cette soufflante sous la forme d'un flux dérivé (A') pour le collecter et le séparer en un flux d'air enrichi en oxygène (B) et un flux d'air appauvri en oxygène (C).

8. Dispositif selon la revendication 7, **caractérisé en ce qu'**un second échangeur (12) est placé en amont de la soufflante (1,1').

9. Moteur de type turbofan ou turbocompresseur, à double corps et à double flux et comprenant un corps haute pression (HP) constitué essentiellement d'un compresseur haute pression (2), d'une chambre de combustion (3) et de turbines (4) et un corps basse pression (BP) entourant le corps haute pression (HP) essentiellement constitué d'une soufflante (1,1') permettant de récolter le fluide extérieur (A,A') et en particulier l'air et d'une turbine basse pression (5) éventuellement suivie d'une zone de post-combustion (7) et d'une tuyère à géométrie variable (8), **caractérisé en ce que** la soufflante (1,1') est constituée de deux ou trois étages de basse pression et qu'elle comprend des nageoires installées sur ses aubes et des séparations installées sur ses redresseurs afin de séparer le flux dérivé (A') du flux principal (A).
